# EUROPEAN PATENT APPLICATION

(11) **EP 2 127 797 A1**
(43) Date of publication of application: **02.12.2009**
(21) Application number: 09006079.9
(22) Date of filing: 04.05.2009
(51) Int. Cl.: B23K 11/00, B23K 11/20, B21J 15/02, B23P 19/06, B23K 103/20

(54) **Method for joining dissimilar metals of steel product and light metal product with each other**

(30) Priority: 28.05.2008 JP 2008139811
(71) Applicant: Kabushiki Kaisha Kobe Seiko Sho (Kobe Steel, Ltd.), Kobe-shi, Hyogo 651-8585 (JP)
(72) Inventor: Iwase, Tetsu, Fujisawa-shi Kanagawa 251-0014 (JP); Imamura, Yoshihaya, Fujisawa-shi Kanagawa 251-0014 (JP)
(74) Representative: Müller-Boré & Partner Patentanwälte

(57) **Abstract**

There is provided method for joining dissimilar metals of a steel product (10) and a light metal product (20) with each other, wherein the light metal product and a rivet (2) made of an iron-base metal are connected with each other beforehand in a previous process preceding spot welding, and subsequently, the rivet and the steel product are spot welded with each other. Then, a cavity for use in clinching the light metal product is formed, and upon the stem of the rivet is embedded into the light metal product to penetrate therethrough, light metal (23) is caused to undergo plastic flow into the cavity (6) of the rivet, for clinching the light metal product to be thereby clinched with the rivet whereupon spot welding for forming a weld nugget only within the scope of an interface between the stem of the rivet, and the steel product is carried out.

## Description

The present invention relates to a method for joining dissimilar metals of a steel product and a light metal product with each other, capable of implementing spot welding between iron - iron similar metals instead of spot welding between dissimilar metals such as aluminum - iron, and so forth, thereby attaining a high joining strength by virtue of a synergistic effect of the spot welding, and clinching of the light metal product with a steel-base rivet, added thereto. The light metal product in the context of the present invention refers to a nonferrous metal product such as an aluminum alloy product, a magnesium product, and so forth.

Spot welding between aluminum - iron dissimilar metals, that is, between a steel product, and an aluminum alloy product, is accompanied by a problem of a fragile intermetallic compound being formed at a joint, thereby impairing reliability of a welded joint. Accordingly, there has since been proposed a method for joining dissimilar metals, such as a steel product and an aluminum alloy product, with each other, whereby iron - iron similar metals are spot-welded with each other at a welded joint. In, for example, Japanese Patent No. 2954476, and U. S. Patent No. 5739498, there has been disclosed a method comprising the steps of preparing a pin (retainer piece) made of an iron-base metal, and spot-welding the pin with a steel product at a spot-welded joint by connection of iron - iron similar metals with each other, thereby joining the steel product with an aluminum alloy product through the intermediary of the pin.

In common with Japanese Patent No. 2954476, and U. S. Patent No. 5739498, the pin made of the iron-base metal is pressed from the aluminum alloy product side of the joint by a spot welding electrode, and embedded into the aluminum alloy product so as to be penetrated therethrough toward the steel product side of the joint at the time of spot welding. Thus, with the pin kept in contact with the steel product, the iron - iron similar metals are spot welded with each other instead of spot welding aluminum - iron dissimilar metals with each other, thereby indirectly joining the steel product with the aluminum alloy product through the intermediary of the pin.

In this connection, as described in U. S. Patent No. 5739498, joining with the use of the pin is possible without punching a hole in either an aluminum-base metal or an iron-base metal, or both thereof beforehand, and the gist of the invention lies in that the pin is embedded into the aluminum alloy product merely by applying pressure by use of the electrode so as to be penetrated through the aluminum alloy product. Also, as described in Japanese Patent No. 2954476, the pin is spot-welded through the electrode to cause the aluminum alloy product to melt due to exothermic reaction, thereby punching a hole, whereupon the pin is embedded into the aluminum alloy product so as to be penetrated therethrough, so that it is unnecessary to punch a hole in either an aluminum-base metal or an iron-base metal, or both thereof beforehand.

The methods disclosed in Japanese Patent No. 2954476, and U. S. Patent No. 5739498, respectively, are epoch-making in that since the pin is spot-welded with the steel product by connection of the iron - iron similar metals with each other, there is no need for carrying out the conventional spot welding between the aluminum - iron dissimilar metals, thereby solving the problemof the fragile intermetallic compound being formed at the joint.

Unfortunately, those patented technologies, however, have not been put to the actual use as yet. The reason for that is because it has been impossible to efficiently apply the pin (retainer piece) made of the iron-base metal to the spot-welded joint in a spot welding process at the time of assembling the automobile body, when higher efficiency is required. More specifically, in the case of those patented technologies, in order to keep the pin in contact with the steel product, thereby causing the iron - iron similar metals to be spot welded with each other, the pin made of the iron-base metal need be pressed from the aluminum alloy product side of the joint to be embedded into the aluminum alloy product so as to be penetrated therethrough toward the steel product side of the joint at the time of spot welding.

With the method according to U. S. Patent No. 5739498, however, since the pin is pressed from the aluminum alloy product side of the joint merely by the agency of pressure applied by the electrode, in an attempt to cause the pin to be embedded into the aluminum alloy product, as disclosed above, damage sustained by the electrode will be intense. However thin in thickness the aluminum alloy product may be, however high in strength the pin may be, or however sharp in shape the tip of the pin may be, a relatively high applied pressure is required in order to cause the pin to be embedded into the aluminum alloy product, and to be penetrated therethrough so as to be in contact with the steel product side of the joint. As a result, the spot welding itself has a vital problem in respect of advantage in that a degree of damage sustained by a dome-shaped spot welding electrode, in widespread use, made of a Cu - Cr alloy, of which electrical conductivity and durability (long service life) are required, will be considerably accelerated. Furthermore, there is no denying a possibility of cracks occurring to the aluminum alloy product upon the iron-base pin being pushed (embedded) into the aluminum alloy product, so that this method has no reliability.

Further, with the method disclosed in Japanese Patent No. 2954476, wherein the pin is spot-welded through the electrode to cause the aluminum alloy product to melt due to exothermic reaction, thereby punching a hole, and embedding the pin into the aluminum alloy product, it is inevitable that a spot welding current is relatively large in order to cause the aluminum alloy product to melt although the current is naturally dependent on a welding condition. For this reason, an exothermically molten portion of the aluminum alloy product will cover a relatively wide scope without being held back within a localized region where the pin is embedded, causing a heat affected zone (HAZ) on the periphery of the exothermically molten portion as well to expand. In consequence, the method has a vital problem in that the thinner in thickness the aluminum alloy product is, the greater in strength deterioration the exothermically molten portion and the HAZ are.

Furthermore, those patented technologies each have a vital defect in that it is necessary to sequentially supply the pin to the tip of the electrode during spot welding whereby numerous pin-drive point are provided. More specifically, there exists quite a practical problem of how to continuously and quickly supply the pin to the tip of the spot welding electrode of an automobile assembly line using automatic welding robots, having neither facilities and a system, nor a structure, for enabling such a process, at present, in the middle of welding at high efficiency. In those patents, specific means for implementing the process as described are not disclosed, and it is not possible at all even to assume the specific means, if any, from those patents. Simply because the specific means are not available, and it will be inevitable that a system becomes complex, and complicated, even if it is available, it is nearly impossible to put those patented technologies to the practical use.

The present invention has been developed to solve those problems, and it is therefore an object of the invention to provide a novel method for joining dissimilar metals of a steel product and a light metal product with each other, capable of implementing spot welding between iron - iron similar metals, without a constraint on, and a problem with conditions applicable to the spot welding, instead of carrying out spot welding between dissimilar metals, such as aluminum - iron, thereby attaining a high joining strength by virtue of a synergistic effect of the spot welding, and clinching of the light metal product with the steel-base rivet, added thereto. Further, another object of the invention is to provide a novel dissimilar metals joint fabricated by the novel method for joining the dissimilar metals, a light metal product for use in joining the dissimilar metals with each other, or a rivet for use in joining the dissimilar metals with each other.

### (The gist of the method for joining dissimilar metals of a steel product and a light metal product with each other)

To that end, in accordance with one aspect of the present invention, there is provided a method for joining dissimilar metals of a steel product and a light metal product with each other, comprising the processes of rivet connection, and spot welding; said method meeting requirements "a" to "g" as follows:
the requirement "a"; the light metal product and a rivet made of an iron-base metal are connected with each other beforehand in a previous process preceding spot welding and subsequently, the rivet and the steel product are spot welded with each other, the requirement "b"; the rivet has a sectional shape substantially resembling the letter T comprising a head, and a stem, and a cavity for use in clinching the light metal product, formed in at least either the head or the stem, the requirement "c"; upon joining the light metal product with the rivet, the stem of the rivet is driven into a position in the light metal product, corresponding to spot welding between the light metal product and the steel product, the requirement "d"; upon driving the rivet, while the light metal product is blanked out by the stem of the rivet, a tip of the stem of the rivet is penetrated through the light metal product toward the side thereof, for connection with the steel product, thereby embedding the stem of the rivet into the light metal product, the requirement "e", upon driving the rivet, the light metal product is further caused to undergo plastic flow into a cavity of the rivet, for clinching the light metal product of the rivet to be thereby clinched with the rivet beforehand, the requirement "f": after the light metal product is clinched with the rivet, the light metal product with the rivet embedded therein is superimposed on the steel product, at a required spot thereof, and the steel product is brought into contact with the tip of the stem of the rivet, and the requirement "g", while the head of the rivet, on the side of the light metal product, and the steel product are pressed by electrodes, respectively, after the requirement "f", the electrodes are energized with each other via the rivet to thereby carry out spot welding for forming a weld nugget only within the scope of an interface between the stem of the rivet, and the steel product.

### (Preferable modes for carrying out the present invention)

Now, with the present invention, the rivet is driven preferably by the press forming using the upper die for pressing the head of the rivet from the upper side, and the lower die for pressing the light metal product from the underside thereof. Further, the rivet is driven into the light metal product preferably upon the light metal product being subjected to the press forming. Still further, the cavity for clinching the light metal product, formed in the outer peripheral surface of the rivet, is preferably the empty space comprising the recess caved-in upward, formed underneath the head, and the reverse-tapered shape gradually increasing in outside diameter thereof, downward. Yet further, the respective surfaces of the rivet and the steel product are coated preferably with the metal plating and / or the organic resin film. Furthermore, the method for joining the dissimilar metals with each other is used preferably for fabrication of the automobile body structural material.

Advantageous effects of the invention are described hereinafter by substituting an aluminum alloy product for the light metal product, and the basically same thing can be said in the case of a magnesium product. The present invention is the same as Japanese Patent No. 2954476, and U. S. Patent No. 5739498, disclosing the method using the pin (retainer piece) made of the iron-base metal, in that the rivet made of the iron-base metal is used, and the iron - iron similar metals, such as the rivet and the steel product, are spot-welded with each other.

However, a first point where the present invention largely differs from those conventional technologies lies in that the light metal product and the iron-base rivet are connected with each other beforehand in the previous process (a separate process) preceding the spot welding as described in the requirement "a", instead of supplying the iron-base rivet to the tip of the electrode at the time of spot welding, and embedding the iron-base rivet into the aluminum alloy product with the use of the electrode. More specifically, the stem of the iron-base rivet is embedded into the position of a spot of the aluminum alloy product, corresponding to spot welding, in the previous process preceding the spot welding, such as, for example, at the time of press forming of the aluminum alloy product. By so doing, it is possible to overcome unrealistic aspects and limitations of the conventional technologies whereby the iron-base rivet is supplied to the tip of the electrode at the time of spot welding, and the iron-base rivet is further embedded into the aluminum alloy product by the electrode to thereby eliminate the constraint on, and the problem with the conditions applicable to the spot welding, so that spot welding between the iron - iron similar metals, such as the rivet and the steel product, is enabled.

Further, a second point where the present invention largely differs from those conventional technologies lies in that upon joining the light metal product with the rivet, the stem of the rivet is driven into the position in the light metal product, corresponding to spot welding between the light metal product and the steel product, and upon driving the rivet, while the light metal product is blanked out by the stem of the rivet, the tip of the stem of the rivet is penetrated through the light metal product toward the side thereof, for connection with the steel product, as described in the requirements "c", and "d", respectively. By doing so, evenness of a contact face between the iron-base rivet, and the steel product, for spot welding with the steel product, together with a rivet-driven portion of the aluminum alloy product, is ensured. If the iron-base rivet is simply embedded in the aluminum alloy product, as is the case of the conventional technologies, the aluminum alloy product as pressed by the embedded iron-base rivet will undergo deformation, thereby forming a protruded part thereof, jutting out toward the steel product. As a result, evenness required of superimposition of a spot (the contact face with the steel product) in the aluminum alloy product, penetrated by the iron-base rivet, stacked upon the steel product, will be considerably interfered with. In this connection, the evenness refers to evenness required of the superimposition (a stacked layer) of the spot in the aluminum alloy sheet 20, penetrated by the iron-base rivet, upon the steel product, and evenness required for the joining by the spot welding. With the present invention, needless to say, unevenness to a degree, tilt, an arc, and so forth are tolerable if the superimposition (the stacked layer) of the aluminum alloy product upon the steel product, and joining by the spot welding can be carried out.

Still further, a third point where the present invention largely differs from those conventional technologies lies in that the aluminum alloy product is clinched with the iron-base rivet embedded beforehand as described in the requirement "e", and further, such connection by clinching of the aluminum alloy product with the iron-base rivet (mechanical connection) is added to the spot welding between the iron - iron similar metals, such as the rivet and the steel product, at the same connection spot, thereby obtaining a high joint strength due to the synergistic effect of those connections.

In order to cause the aluminum alloy product to be clinched with the iron-base rivet embedded beforehand, it is insufficient to simply embed the iron-base rivet in the aluminum alloy product, but there is the need for introducing a novel idea to the shape of the iron-base rivet, such as, for example, formation of the cavity for clinching the aluminum alloy product in the outer peripheral surface of the iron-base rivet as described in the requirement "b".

In order to effectively drive the rivet so as to actually satisfy all those conditions, it is necessary to carry out press forming using dies. More specifically, there is the need for pressing the head of the rivet from the upper side, and a lower die for pressing the aluminum alloy product from the underside thereof. It is evident from this that with those conventional technologies whereby the iron-base rivet is embedded into the aluminum alloy product simply by the electrode, the aluminum alloy product cannot be clinched. Further, it is evident that there is no possibility at all that the aluminum alloy product can be clinched with the iron-base rivet within the same process where the spot welding is carried out, so that there is the necessity of connecting the iron-base rivet with the aluminum alloy product beforehand in a previous process (separate process) preceding the spot welding.

Only if such press forming as described is adopted, the iron-base rivet is effectively penetrated and driven into the position in the aluminum alloy product, corresponding to the spot welding while the aluminum alloy product is being clinched with the iron-base rivet after ensuring the evenness of the contact face between the iron-base rivet, and the steel product, for spot welding with the steel product, together with the rivet-driven portion of the aluminum alloy product. Further, through selection of the optimum condition for press forming in carrying out the press forming described, it becomes possible to prevent a crack from occurring in the aluminum alloy product at the time of pushing (embedding) the iron-base rivet into the aluminum alloy product, or clinching the aluminum alloy product, according to the shape or thickness of the pin.

Further, in the case of the press forming described, there is no necessity at all of causing the aluminum alloy product to melt due to exothermic reaction, thereby punching a hole, and embedding the iron-base rivet into the aluminum alloy product. There is no necessity at all of carrying out conventional spot welding between dissimilar metals, such as aluminum - iron, either. Accordingly, to cope with softening (strength deterioration) of the aluminum alloy product, due to welding, it need only be sufficient to select a spot welding condition for preventing softening the heat affected zone (HAZ) around the iron-base rivet as a spot-welded joint at the time of the spot welding between similar metals of iron - iron, such as the iron-base rivet and the steel product.

Thanks to those advantageous effects described, the present invention can implement the spot welding between iron - iron similar metals, without a constraint on, and aproblemwith conditions applicable to the spot welding. Further, with the present invention, it is possible to increase, for example, joint strength of a dissimilar metals joint, (peel strength as measured on the basis of a cross-tensile test-piece, according to JIS, Z3137) to not less than 2 kN, owing to the synergistic effect of the spot welding and connection (mechanical connection) by clinching of the aluminum alloy product with the iron-base rivet, added thereto.
Fig. 1 is a longitudinal sectional view showing a mode of an aluminum alloy sheet according to the invention, and an iron-base rivet connected therewith;
Fig. 2 is an enlarged perspective view showing the iron-base rivet in Fig. 1;
Fig. 3 is a longitudinal sectional view showing a mode of the invention, in time sequence, for clinching the aluminum alloy sheet with the iron-base rivet beforehand, in the initial stage, by way of example;
Fig. 4 is a longitudinal sectional view showing a mode of the invention, in time sequence, for clinching the aluminum alloy sheet with the iron-base rivet beforehand, in the following stage, by way of example;
Fig. 5 is a longitudinal sectional view showing a mode of the invention, in time sequence, for clinching the aluminum alloy sheet with the iron-base rivet beforehand, in the final stage, byway of example;
Fig. 6 is a longitudinal sectional view showing a dissimilar metals joint, before spot welding, in partial section;
Fig. 7 is a longitudinal sectional view showing a mode of spot welding according to the invention;
Fig. 8 is a longitudinal sectional view showing a dissimilar metals joint after the spot welding;
Fig. 9 is a longitudinal sectional view showing another mode of the iron-base rivet according to the invention;
Fig. 10 is a longitudinal sectional view showing still another mode of the iron-base rivet according to the invention;
Fig. 11 is a longitudinal sectional view showing a further mode of the iron-base rivet according to the invention;
Fig. 12 is a longitudinal sectional view showing a still further mode of the iron-base rivet according to the invention;
Fig. 13 is a longitudinal sectional view showing a yet further mode of the iron-base rivet according to the invention;
Fig. 14 is a longitudinal sectional view showing a mode in which the invention is applied to an aluminum roof panel;
Fig. 15 is a longitudinal sectional view showing another mode in which the invention is applied to an aluminum roof panel;
Fig. 16 is a perspective view of an automobile body using the aluminum roof panel; and
Fig. 17 is an enlarged perspective view showing the aluminum roof panel shown in Fig. 16.

Specific embodiments of the invention are described hereinafter with reference to the accompanying drawings. Further, in the following description, explanation will center around an aluminum alloy product among light metal products, however, the basically same thing can be said in the case of a magnesium product.

### (Joining of an iron-base rivet with an aluminum alloy product)

With the present invention, dissimilar metals, such as a steel product and an aluminum alloy product, are joined with each other on the precondition that rivet connection is used in combination with spot welding. In this case, according to requirement "a", the aluminum alloy product and the iron-base rivet as dissimilar metals of aluminum - iron are mechanically connected with each other beforehand in the process of, for example, press forming the aluminum alloy product, as the previous process (separate process) preceding a process for spot welding the steel product with the aluminum alloy product. Thereafter, the rivet is spot welded with the steel product.

### (Connection of the aluminum alloy product with the rivet)

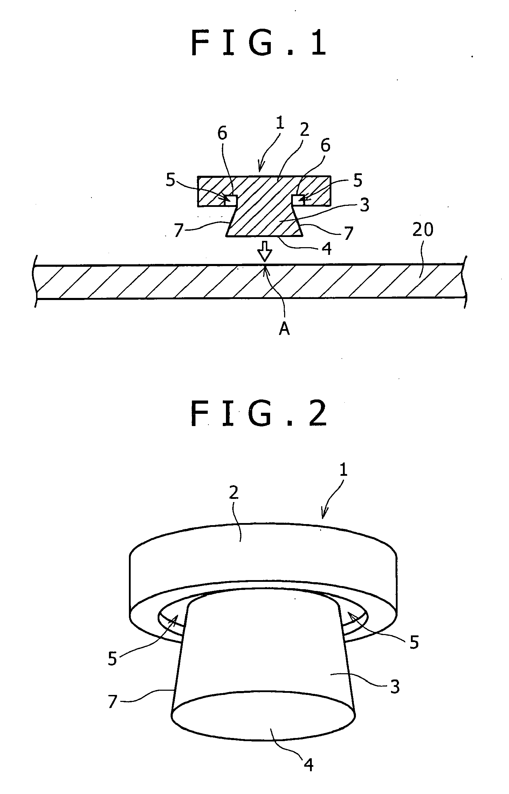

Figs. 1 and 2 show an aluminum alloy sheet 20 in the form of a flat sheet as an aluminum alloy product in a dissimilar metals joint, and an iron-base rivet 1 connected therewith, respectively. In Fig. 1, there are shown the aluminum alloy sheet 20, and the iron-base rivet 1 connected therewith, in longitudinal section, respectively. Fig. 2 is a perspective view showing the iron-base rivet 1.

Herein, as shown in Fig. 1 and according to requirement "c", the iron-base rivet 1 is driven (embedded) into a plurality of selected positions A, in the aluminum alloy sheet 20, each corresponding to spot welding with the steel product. The iron-base rivet 1 is of the composition of a commonly used (known) iron-base metallic material such as steel, cast iron, cast steel, a high alloy steel including stainless steel, and so forth. The reason why the position of a spot of the aluminum alloy sheet 20, into which the iron-base rivet 1 is driven, is referred to as "a position corresponding to spot welding" is because the aluminum alloy sheet 20 is not directly spot welded with the steel product in the case of the present invention, and the position of the spot of the aluminum alloy sheet 20, into which the iron-base rivet 1 is driven, is actually "the position corresponding to spot welding". In Fig. 1, there is shown the position A corresponding to spot welding, located only at one spot of a plurality of spots by way of sample.

In order that the iron-base rivet 1 is spot welded with the steel product as described later on, thereby enhancing or ensuring joint strength, the iron-base rivet 1 needs to have a correspondingly large size, and weight. For that reason, the aluminum alloy product is increased in weight according to the number of the iron-base rivets 1 in use. Accordingly, from the standpoint of checking an increase in weight, attributable to the iron-base rivets 1, there is no necessity at all of embedding the iron-base rivet 1 in regions (positions) other than respective regions for the plurality of selected positions A, in the aluminum alloy sheet 20, each corresponding to the spot welding with the steel product.

Further, depending on design conditions for a dissimilar metals joint, and joint strength of spot welding of the dissimilar metals, that is, the steel product and the aluminum alloy product, with each other, the iron-base rivet 1 need not be embedded in all the plurality of selected positions A corresponding to the spot welding with the steel product. Needless to say, the iron-base rivet 1 may be embedded in all the plurality of selected positions A corresponding to the spot welding with the steel. However, depending on the number of the iron-base rivets 1 in use, a size of each the iron-base rivets 1, and the number of the positions A corresponding to the spot welding, there is the risk of an increase in the weight of the iron-base rivets 1 becoming greater to thereby undermine the significance of using the aluminum alloy product in order to attain reduction in weight. For this reason, the number of the iron-base rivets 1 in use may be reduced to thereby check an increase in the weight, attributable to the iron-base rivets 1, and there may be provided a position A corresponding to spot welding with the steel, without the iron-base rivet 1 embedded therein. In other words, spot welding according to the invention may include not only spot welding between similar metals of iron - iron, such as the iron-base rivet, and the steel product, with each other, but also spot welding between dissimilar metals, such as aluminum - iron, with each other, effected in a region (at a position) of the aluminum alloy sheet 20, without the iron-base rivet 1 embedded therein.

### (Rivet Structure)

As shown in Figs. 1, and 2, respectively, by way of example, in order to meet requirement "b", the iron-base rivet 1 has a sectional shape substantially resembling the letter T comprising a head 2, and a stem 3, and a cavity 5 for use in clinching the aluminum alloy product is formed in the head or / and the stem. More specifically, the rivet 1 has the sectional shape substantially resembling the letter T comprising the head 2 extended in the horizontal direction (transverse direction), and the stem 3 relatively small in diameter as compared with the head 2. The head 2 of the rivet 1, shown in Figs. 1, and 2, by way of example, is circular in planar shape, however, the planar shape or the overall shape of the head 2 may be square or indeterminate. Further, the stem 3 extended in the vertical direction (the up-and-down direction) of the rivet 1 may be square and square-cylindrical in planar shape or overall shape, or indeterminate in the planar shape instead of being circular or cylindrical in the planar shape or the overall shape. However, the stem 3 of the rivet need have a length sufficient to penetrate through the aluminum alloy product thicknesswise, necessary for spot welding connection (contact) with the steel product.

### (Clinching Cavity)

Now, a cavity (hereinafter referred to also as clinching cavity) 5 for clinching the aluminum alloy sheet 20 is formed in the head of the rivet 1, or / and the stem thereof. That is, the head 2 of the rivet 1, shown in Figs. 1, and 2, is provided with a recess (groove) 6 caved-in upward, formed annularly around a root portion of the stem 3, underneath the head 2. On the other hand, the stem 3 of the rivet 1 is formed in a truncated cone-like shape (reverse-tapered shape) with an outer peripheral surface thereof, having a reverse-taper 7 gradually increasing in outside diameter of the shape downward. Further, the cavity 5 for clinching the aluminum alloy sheet 20 is formed by the underside face of the head 2, including the recess 6, and the outer peripheral surface of the stem 3, provided with the reverse-taper 7.

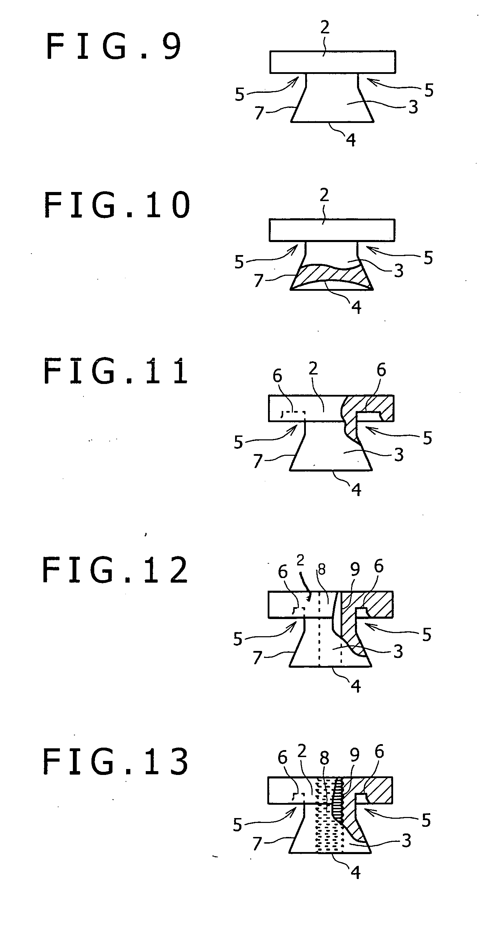

Now, "clinching" in the present description means that the iron-base rivet 1 is, in geometrical sense, meshed with the aluminum alloy product (sheet) by taking advantage of plastic flow of aluminum alloy, occurring from the side of the aluminum alloy sheet 20 into the cavity 5 of the iron-base rivet 1. Accordingly, protruded and recessed shapes, tilted shapes, and so forth, provided in the underside peripheral surface of the head 2 of the iron-base rivet 1, and the outer peripheral surface of the stem 3, respectively, are compounded with each other, or those shapes are independently joined with each other to thereby form the clinching cavity 5. Further, the clinching cavity provided on the outer periphery of the stem 3 as well as the head 2 of the iron-base rivet 1, is not limited to those described later on with reference to Figs. 9 to 13, respectively, as long as the clinching cavity can accommodate aluminum alloy that has moved in due to the plastic flow, and is capable of geometrically meshing the aluminum alloy sheet 20 with the iron-base rivet 1 to thereby implement clinching, so that the shape as well as the structure of the clinching cavity can be selected as appropriate.

Thus, in order to cause the aluminum alloy product to be clinched with the iron-base rivet 1 to be embedded therein as described above, it is necessary to introduce a novel idea to the shape of the iron-base rivet 1 such that the cavity 5 for clinching the aluminum alloy sheet 20 is first formed in the iron-base rivet 1. In contrast, with an iron-base rivet 1 according to the conventional technology, having a simple sectional shape substantially resembling the letter T, comprising a head2, and a stem 3, it is not possible to geometrically mesh the iron-base rivet 1 with an aluminum alloy product (sheet). Further, by simply pressing the iron-base rivet 1, using spot welding electrodes, and so forth, without the use of upper and lower dies, to thereby embed the iron-base rivet 1, it is not possible to cause the aluminum alloy product to be clinched, as described later on.

### (Driving of the rivet into the aluminum alloy sheet)

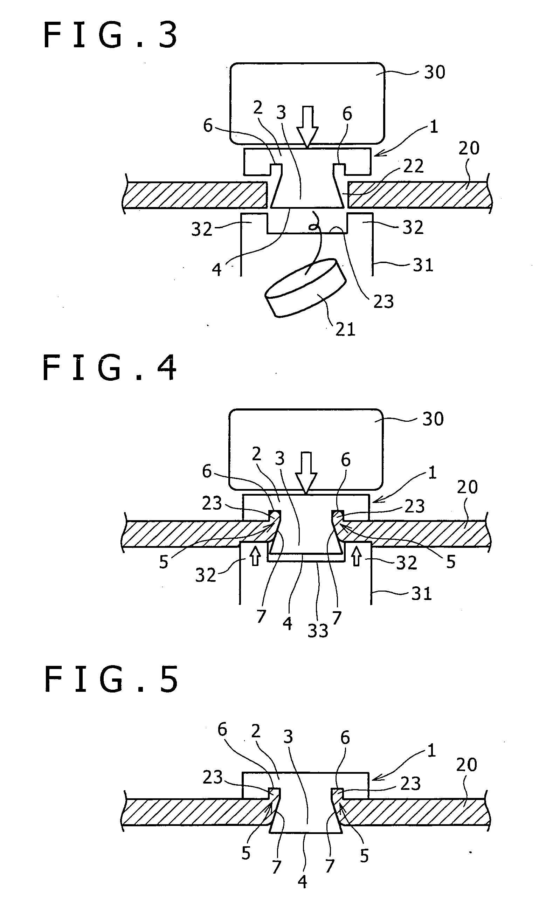

In Figs. 3 to 5, there is shown by way of example a mode in which the stem 3 of the iron-base rivet 1 is driven into a spot welding position (the position A in Fig. 1) of the aluminum alloy sheet 20 beforehand at the time when the aluminum alloy sheet 20 is joined with the iron-base rivet 1. In so doing, the stem 3 of the iron-base rivet 1 is embedded into the aluminum alloy sheet 20, the bottom (4) of the stem is penetrated through the surface of the aluminum alloy sheet 20, toward a side thereof, for connection with a steel product, and further, the aluminum alloy sheet 20 is clinched with the iron-base rivet 1.

In this connection, in order to cause the aluminum alloy sheet 20 to be clinched with the iron-base rivet 1, it is required that the clinching cavity 5 is present in the iron-base rivet 1, and the iron-base rivet 1 is driven into the aluminum alloy sheet 20 by carrying out press forming using dies, as shown in Figs. 3 to 5.

In order to cause aluminum alloy to undergo plastic flow from the side of the aluminum alloy sheet 20 into the clinching cavity 5 of the iron-base rivet 1, firstly there is the need for an upper die 30 for driving the stem 3 of the rivet into the aluminum alloy sheet 20 by pressing the head 2 of the iron-base rivet 1 from the upper side thereof. Concurrently, there is the need for pressing the aluminum alloy sheet 20 from the underside thereof, thereby blanking (punching) the aluminum alloy sheet 20.

Thereafter, in order to cause the aluminum alloy at the edge of a hole (on the periphery of a hole) blanked in the aluminum alloy sheet 20 to undergo plastic flow from the side of the aluminum alloy sheet 20 into the cavity 5 of the rivet, it is necessary to keep pressing the head 2 of the iron-base rivet from the upper side thereof with the use of the upper die 30 to thereby embed the stem 3 of the rivet into the aluminum alloy sheet 20 while concurrently pressing the aluminum alloy at the edge of the blanked hole (on the periphery of the hole) from the underside of the aluminum alloy sheet 20 to thereby cause the aluminum alloy to undergo plastic flow into the cavity 5 of the rivet.

In contrast, by simply pressing the iron-base rivet 1 with the use of the spot welding electrodes, and so forth, to be thereby embedded in the aluminum alloy sheet 20, as is the case with the traditional technology, it is not possible to press the aluminum alloy at the edge of the blanked hole (on the periphery of the hole) from the underside thereof even if the cavity 5 is formed in the iron-base rivet 1.

As a result, by simply pressing the iron-base rivet 1 alone, with the use of the spot welding electrodes, and so forth, it is not possible to cause the aluminum alloy to undergo plastic flow into the cavity 5 of the iron-base rivet 1 to thereby effect clinching. More specifically, it is not possible to geometrically mesh the iron-base rivet 1 with the aluminum alloy product (sheet) by taking advantage of the plastic flow of the aluminum alloy into the cavity 5 of the iron-base rivet 1. Accordingly, there is no possibility at all that the aluminum alloy product can be clinched with the use of the iron-base rivet 1 within the same process where the spot welding is carried out, so that there is the necessity of connecting the iron-base rivet 1 with the aluminum alloy product beforehand in a previous process (separate process) preceding the spot welding, such as at the time of producing the aluminum alloy sheet 20, at the time of press forming the aluminum alloy sheet 20, and so forth.

As shown in Fig. 3, the head 2 of the iron-base rivet 1 is first pressed by the upper die (punch) 30 from the upper side (in the vertical direction) to thereby embed the stem 3 of the iron-base rivet 1 into the spot welding position (the position A in Fig. 1) in the aluminum alloy sheet 20. Upon driving the iron-base rivet 1 as above, the aluminum alloy sheet 20 is pressed (supported, secured) from the underside thereof by a protrusion 32 of a lower die 31, to be subj ected to blanking (punching) by the stem 3 of the iron-base rivet 1, whereupon a portion of the aluminum alloy piece 21, corresponding to an embedded portion of the stem 3, is blanked out, thereby forming a through-hole 22. That is, to meet requirement "d", upon driving the iron-base rivet 1, while the aluminum alloy piece 21 is blanked out by the stem 3 of the iron-base rivet 1, the tip 4 of the stem 3 of the rivet is penetrated through the aluminum alloy sheet 20 toward a side thereof, for connection with a steel product, thereby embedding the stem 3 of the rivet into the aluminum alloy sheet 20.

In this case, assuming that the stem 3 of the iron-base rivet 1 is simply embedded in the spot welding position (the position A in Fig. 1) in the aluminum alloy sheet 20, and the aluminum alloy piece 21 is not blanked out (removed), it will become difficult to implement superimposition of the aluminum alloy sheet 20 upon the steel product, and joining by spot welding, as described later on. More specifically, in case the aluminum alloy piece 21 is not blanked out, the aluminum alloy sheet 20 as pressed by the embedded stem 3 of the iron-base rivet 1 will undergo deformation, thereby forming a protruded part thereof, jutting out (bulging out) downward in the figure (toward the steel product), along a recess 33 of the lower die 31. As a result, evenness required of superimposition of a spot (the bottom 4) in the aluminum alloy sheet 20, penetrated by the stem 3 of the iron-base rivet 1, upon the steel product, as described later on, and evenness required of the joining by the spot welding, will be considerably interfered with. Therefore, it becomes essential to blank out the aluminum alloy piece 21.

Next, in Fig. 4 following Fig. 3, in time sequence, the head 2 of the iron-base rivet 1 is continuously pressed by the upper die (punch) 30, and the aluminum alloy sheet 20 is pressed (supported, secured) from the underside thereof by the protrusion 32 of the lower die 31. Accordingly, following advance (descent) made in embedding of the stem 3 of the rivet in the through-hole 22, the tip 4 of the stem 3 of the rivet is penetrated through the aluminum alloy sheet 20 toward the underside (toward the steel product as described later on).

Concurrently with the above, an aluminum alloy 23 at the edge of the blanked hole (on the periphery of the hole) is pressed from the underside of the aluminum alloy sheet 20 by the protrusion 32 of the lower die 31 to thereby cause the aluminum alloy 23 to undergo plastic flow into the cavity 5 of the iron-base rivet 1. More specifically, the aluminum alloy 23, on a side of the aluminum alloy sheet 20, adjacent to the iron-base rivet 1, pressed by the protrusion 32 of the lower die 31, undergoes plastic flow, subsequently entering the cavity 5 formed by the underside face of the head 2 of the iron-base rivet 1, including a recess 6, and the outer peripheral surface of the stem 3, having the reverse-taper 7.

In Fig. 5 following Fig. 4, in time sequence, there is shown the aluminum alloy sheet 20 that is not only connected with the iron-base rivet 1 but also clinched with the iron-base rivet 1. As described later on in the present description, the aluminum alloy sheet 20 in Fig. 5 is combined with a steel product, and the iron-base rivet 1 is spot welded to the steel product. With the aluminum alloy sheet 20 shown in Fig. 5, the tip 4 of the stem 3 of the iron-base rivet 1 is penetrated through the aluminum alloy sheet 20 toward the underside thereof (toward the steel product described later on), and the aluminum alloy 23, on the side of the aluminum alloy sheet 20, adjacent to the iron-base rivet 1, enters the cavity 5 of the iron-base rivet 1 to be thereby clinched. More specifically, the aluminum alloy 23 undergoes plastic flow from the aluminum alloy sheet 20 side into the cavity 5 of the iron-base rivet 1, and the iron-base rivet 1 is geometrically meshed with the aluminum alloy sheet 20 to thereby cause the aluminum alloy product (sheet) 20 to be clinched. That is, to meet requirement "e", upon driving the iron-base rivet 1, the aluminum alloy sheet 20 is further caused to undergo plastic flow into the cavity 5 of the rivet 1 for clinching the aluminum alloy to be thereby clinched with the rivet 1 beforehand.

Further, the tip 4 of the stem 3 of the rivet is penetrated through the aluminum alloy sheet 20, toward the side thereof, adjacent to a connection face thereof, with the steel product, and evenness of the superimposition (a stacked layer) of the spot in the aluminum alloy sheet 20, penetrated by the stem 3 of the iron-base rivet 1, including the periphery of the spot, upon the steel product, and evenness required for the joining by the spot welding are secured in a relatively wide range. Further, in practice, the spot in the aluminum alloy sheet 20, penetrated by the stem 3 of the iron-base rivet 1, need not have the same evenness as that of the condition of a flat sheet prior to press forming, and rivet-driving, and needless to say, the spot in the aluminum alloy sheet 20, penetrated by the stem 3 of the iron-base rivet 1, may have unevenness to a degree, tilt, an arc, and so forth, if the superimposition (the stacked layer) of the aluminum alloy sheet 20 upon the steel product, and joining by the spot welding can be carried out.

In this connection, connection of the iron-base rivet 1 by press forming may be carried out in a process for the primary press forming of the aluminum alloy sheet 20 as a car body structural material, or in a separate process before or after the process for the primary press forming, such as, for example, in a process for fabricating the aluminum alloy sheet 20, and so forth.

By the agency of such clinching of the aluminum alloy sheet 20 with the iron-base rivet 1, a spot-welded joint formed by similar metals of iron - iron, such as the iron-base rivet 1, and a steel product, as described later on, is added with connection by clinching of the aluminum alloy sheet 2 0 with the iron-base rivet 1 (mechanical connection). Hence, owing to the synergistic effect of those connections, it is possible to obtain a dissimilar metals joint having a high joint strength.

Further, through selection of the optimum condition for press forming in carrying out the press forming described, it becomes possible to prevent a crack from occurring in the aluminum alloy product at the time of pushing (embedding) the iron-base rivet into the aluminum alloy product, or clinching the aluminum alloy product, according to the shape or thickness of the pin.

### (Combination of a steel sheet with the aluminum alloy sheet)

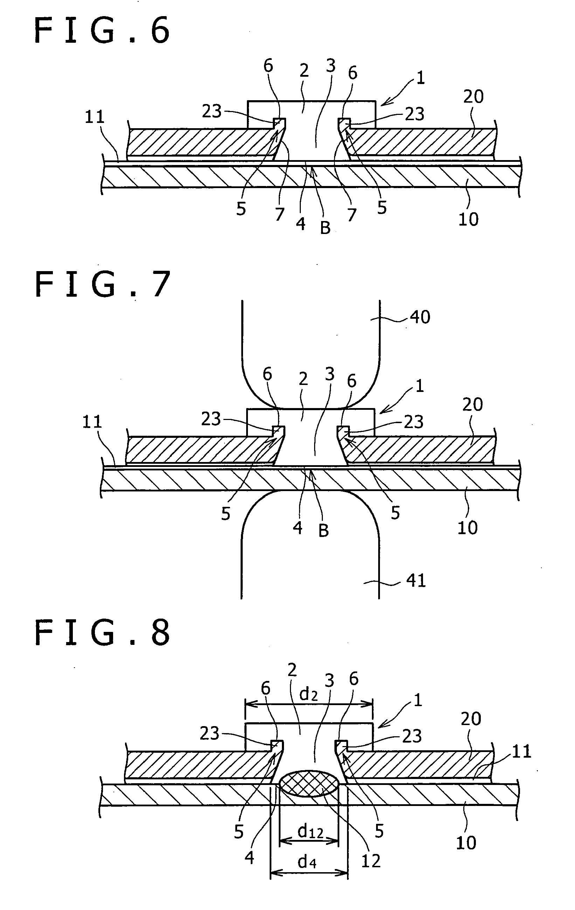

In Fig. 6, there is shown a dissimilar metals joint, before spot welding, inpartial section, wherein the aluminumalloy sheet 20 connected with the iron-base rivet 1 in Fig. 5, and clinched with the iron-base rivet 1, is stacked on, and combined with a steel sheet 10, at a required spot thereof. Herein, the position of the iron-base rivet 1 is aligned with a spot welding position B of the steel sheet 10. More specifically, to meet requirement "f", the aluminum alloy sheet 20 with the rivet 1 embedded therein is superimposed on the required spot of the steel sheet 10, and the steel sheet 10 is brought into contact with the tip 4 of the stem 3 of the rivet. The dissimilar metals joint includes, for example, the various structural materials for the automobile body, such as a roof panel structural material, and so forth, as described later on.

The surface of the steel sheet 10 in Fig. 6, on a side thereof, for connection with the aluminum alloy sheet 20, is coated with any of known films 11 that are commonly applied to a steel sheet, including a plating film of metal such as zinc, zinc alloy, and so forth, and / or an organic resin film such as a paint and so forth, a lubricant, and a lubricating oil. The films 11 each are applied singly in a monolayer, or the same are combined with each other to be applied in the form of a compound thereof, in a monolayer, or multi-layers. Among those films, the organic resin film, in particular, is interposed as an electrically insulating film in-between to thereby prevent corrosion due to dissimilar metals, such as steel and aluminum, coming into contact with each other, so-called electrolytic corrosion. In Fig. 6, the corrosion resistant film 11 is applied to the surface of the steel sheet 10, only on one side thereof (on a side thereof, for connection with the aluminum alloy sheet 20), however, it goes without saying that the corrosion resistant film 11 may be applied to the surface of the steel sheet 10, on both sides thereof. Furthermore, such a corrosion resistant film may be applied to the surface of the iron-base rivet 1, and to the surface of the aluminum alloy sheet 20 (on one side thereof, or both sides thereof).

Since the present invention is the case of the spot welding between similar metals of iron - iron, such as the iron-base rivet 1, and the steel sheet 10, the present invention has a considerable advantage in that spot welding can be implemented with ease even if the electrically insulating film 11 such as the organic resin film, and the metal plating 11, formed to a fairly large thickness (film thickness necessary for corrosion resistance), are present on either the steel sheet 10, or the iron-base rivet 1. In contrast, if the electrically insulating film 11 such as the organic resin film, in particular, is present in the case of spot welding between dissimilar metals, such as aluminum - iron, it will be impossible to implement the spot welding.

### (Spot Welding)

There is described hereinafter a method for spot welding between similar metals of iron - iron, such as the steel sheet 10, and the iron-base rivet 1 connected to the aluminum alloy sheet 20, shown in Fig. 6, with reference to Figs. 7, and 8. Fig. 7 shows a mode of spot welding, in section, and Fig. 8 shows a mode of a welded joint (a dissimilar metals joint) after the spot welding, shown in Fig. 7, in section.

In Fig. 7, the head 2 (on the upper side in the figure) of the iron-base rivet 1, on a side of the welded joint, adjacent to the aluminum alloy sheet 20, and the steel sheet 10 (on the underside in the figure), are aligned with each other at the spot welding position B, and are superimposed one upon another so as to be clamped, and pressed by a spot welding electrode 40 (on the upper side in the figure), and a spot welding electrode 41 (on the underside in the figure), respectively.

Then, those electrodes 40, 41 are energized with each other via the head 2 of the iron-base rivet 1, the stem 3, and the steel sheet 10 to thereby form a weld nugget 12 only within a scope of an interface between the stem 3 of the iron-base rivet 1, and the steel sheet 10, as shown in Fig. 8. That is, to meet requirement "g", while the head 2 of the rivet, on the side of the aluminum alloy sheet 20, and the steel sheet 10 are being pressed by the electrodes 40, 41, respectively, those electrodes 40, 41 are energized with each other via the iron-base rivet 1 to thereby carry out spot welding for forming the weld nugget 12 only within the scope of the interface between the stem 3 of the rivet, and the steel sheet 10.

### (Weld Nugget Diameter)

Herein, "to form the weld nugget 12 within the scope of the interface" means that a diameter d12 of the weld nugget 12, in the lateral direction thereof, shown in Fig. 8, does not increase so as to exceed a diameter d4 of the tip 4 of the stem 3 of the iron-base rivet 1, that is, the diameter d12 is smaller than the diameter d4. In case the diameter d12 is larger than the diameter d4, it follows that the weld nugget 12 will reach as far as the iron-base rivet 1, or a portion of the aluminum alloy sheet 20, on the periphery of a spot-welded joint. In consequence, there occurs fusion of the portion of the aluminum alloy sheet 20, and expansion of a heat affected zone, thereby causing the iron-base rivet 1, or the portion of the aluminum alloy sheet 20, on the periphery of the spot-welded joint, to undergo considerable deterioration in strength, so that it will become impossible to keep peel strength of the dissimilar metals joint, as measured on the basis of a cross-tensile test-piece, at not less than 2 kN.

In this connection, in order to secure a size of the diameter d12 of the weld nugget 12, in the lateral direction thereof, and to ensure spot weld strength of iron - iron similar metals joined with each other, it is necessary to secure a size of the stem 3 of the iron-base rivet 1, or the diameter d4 of the tip 4 of the stem 3. Assuming that a thickness (sheet thickness) of a steel product (steel sheet), at the same level as that of a steel product for spot welding of steel panel - steel panel, each made up of a steel sheet for use in a common automobile panel, such as a roof panel as described later on, and so forth, is "t", the diameter d12 of the weld nugget 12, in the lateral direction thereof, preferably falls in a range of 3.5 to 7 √t mm in diameter. If the stem 3 of the iron-base rivet 1 is excessively small in diameter, or the diameter d4 of the tip 4 of the stem 3 is excessively small, this will render it impossible to ensure the preferable size of the diameter d12 of the weld nugget 12, in the lateral direction thereof, described as above, and a preferable spot weld strength.

Further, from the standpoint of keeping the heat affected zone of the iron-base rivet 1, or the portion of the aluminum alloy sheet 20, on the periphery of the spot-welded joint, as small as possible at the time of spot welding, there is the need for ensuring a size of a diameter d2 of the head 2 of the iron-base rivet 1. However, as the diameter d2 and the diameter d4 each are increased in size, so is the iron-base rivet 1 in weight. Consequently, an increase in weight becomes significant depending on the number of the positions A corresponding to the spot welding (the number of the iron-base rivets 1), and there is the risk of undermining the reason for using the aluminum alloy product in order to attain reduction in weight. Accordingly, the diameter d2 of the head 2 of the iron-base rivet 1, and the diameter d4 of the tip 4 of the stem 3 are designed by getting around trade-offs among securing of the diameter of the weld nugget 12, reduction in the size of the heat affected zones of the aluminum alloy sheet 20, and a permissible increase in weight, attributable to the iron-base rivet 1.

### (Mode of the shape of the iron-base rivet)

Now, the shape (overall shape, sectional shape) of the iron-base rivet 1 is not limited to the mode described with reference to Figs. 1 to 8, respectively. More specifically, as for the shape of the iron-base rivet 1, any shape designed by getting around trade-offs among securing of the diameter of the weld nugget 12, reduction in the size of the heat affected zones of the aluminum alloy sheet 20, and the permissible increase in weight, attributable to the iron-base rivet 1 can be selected as appropriate from among shapes shown in Figs. 9 to 13, respectively, by way of example, or among shapes other than those shapes.

Further, as for the shapes other than those shapes shown in Figs. 9 to 13, respectively, the diameter of the stem 3 of the rivet 1 (the root of the stem on a side thereof, adjacent to the head 2 = the diameter of the root thereof) is smaller than that of the head 2, however, the diameter d4 of the tip 4 of the stem 3 in a shape having a reverse taper 7, gradually increasing in outside diameter downward, need not necessarily be small as compared with the diameter of the head 2, and may be the same as the diameter of the head 2, or may be relatively large.

Fig. 9 shows a mode in which a rivet is closely analogous in shape to the iron-base rivet 1 shown in Fig. 1, differing only in that the recess (groove) 6 caved-in upward, formed annularly around the root portion of the stem 3, underneath the head 2, is missing, as compared with Fig. 1, and a cavity 5 for clinching the aluminum alloy sheet 20 is formed by the underside face of the head 2, and the outer peripheral surface of the stem 3, provided with the reverse-taper 7.

Fig. 10 shows a mode in which a rivet is closely analogous in shape to the iron-base rivet 1 shown in Fig. 9, but differs in that a recess is provided at the center of the tip 4 of the stem, or the tip 4 of the stem is divided into a plurality of pieces, as compared with Fig. 1.

Fig. 11 shows a mode in which a rivet is closely analogous in shape to the iron-base rivet 1 shown in Fig. 1, but differs in that an annular recess (groove) 6 formed underneath the head 2 has a relatively large width, in the lateral direction thereof.

Fig. 12 shows amode in which an iron-base rivet is closely analogous in shape to the iron-base rivet 1 shown in Fig. 1, but differs in that a hollow portion 8 vertically penetrating through the iron-base rivet is formed at the respective centers of the head 2 and the stem 3 to thereby reduce the weight of the iron-base rivet. In this case, the hollow portion 8 need not necessarily be caused to penetrate through the head 2 and the stem 3, nor need be provided at the respective centers. There is no need for only one length (one piece) of the hollow portion 8 being provided either. In short, a solid portion of the iron-base rivet may be reduced in volume by providing the head 2 and the stem 3 with a void, such as a hollow part and a cavity, as appropriate, thereby attaining reduction in weight. Designing of those voids is made from the viewpoint of leaving out solid portions sufficient to enable spot welding, and to secure the strength of the iron-base rivet.

Fig. 13 shows a mode in which an iron-base rivet is closely analogous in shape to the iron-base rivet 1 shown in Fig. 12, but differs in that a threaded part 9 is formed around the periphery of the hollow portion 8, thereby reducing the weight of the iron-base rivet.

As described in the foregoing, the lighter the weight of the iron-base rivet 1 is, the more preferable it is. It is unavoidable, however, that because the iron-base rivet 1 is made of an iron-base material, the same is heavier than a commercially available self-piercing rivet made of an aluminum alloy, weighing from 0.3 to 0.4 g / piece. However, if the number of the iron-base rivets 1 required on the basis of the number of rivet driving points for spot welding, in the case of an automobile roof panel of a standard size, and so forth, and a resultant increase in weight are taken into consideration, the weight thereof is preferably controlled to not more than 3 g / piece at most regardless of the shape thereof. Furthermore, the surface of the iron-base rivets 1 may be coated with any of known films that are commonly applied to a steel product, including a plating film of metal such as zinc, zinc alloy, and so forth, and / or an organic resin film such as a paint and so forth, a lubricant, and a lubricating oil. The films each may be applied singly in a monolayer, or the same are combined with each other to be applied in the form of a compound thereof, in a monolayer, or multi-layers.

### (Automobile Roof Installation Structure)

Now, an example where an embodiment of the invention is applied to an automobile roof installation structure is specifically described hereinafter with reference to the accompanying drawings.

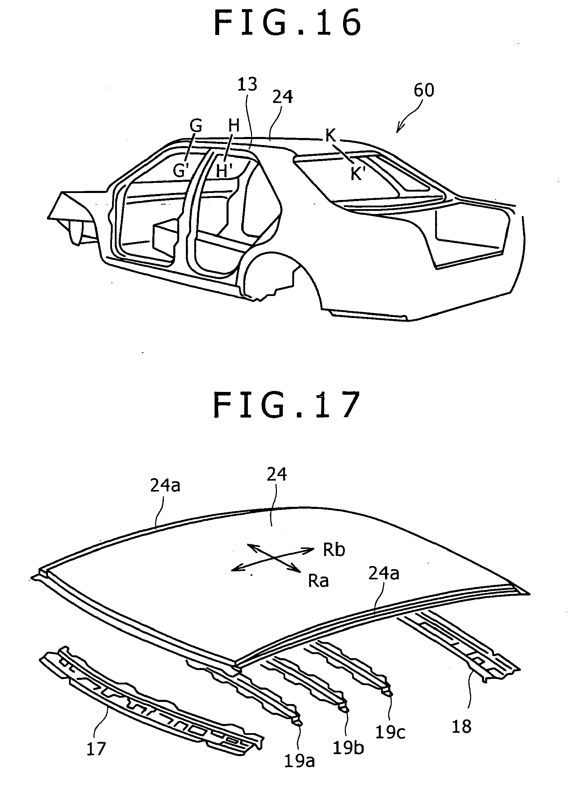

A mode of an automobile roof installation structure itself, as the precondition, is basically the same as the conventional one. Fig. 17 is a perspective view of a roof panel in whole, showing a representative structure of a roof panel 24 of the automobile body, made up of an aluminum alloyproduct (sheet). InFig. 17, reference numeral 24a denotes a flange (a side edge) provided on both sides (on respective sides, in the lateral direction of the automobile body) of the aluminum roof panel 24. The aluminum roof panel 24 is normally designed so as to be substantially in the shape of a box having a given curvature such that the central part of the roof panel has a curvature Ra in the lateral direction of the automobile body, and a curvature Rb in the longitudinal direction of the automobile body.

The aluminum roof panel 24 is attached to the automobile body through the intermediary of roof reinforcements such as roof panel reinforcements 19a, 19b, 19c, and so forth, made of steel or an aluminum alloy, after installation of accessory frames and panels such as a windshield header panel 17, a back window frame upper 18, and so forth, made of steel or an aluminum alloy.

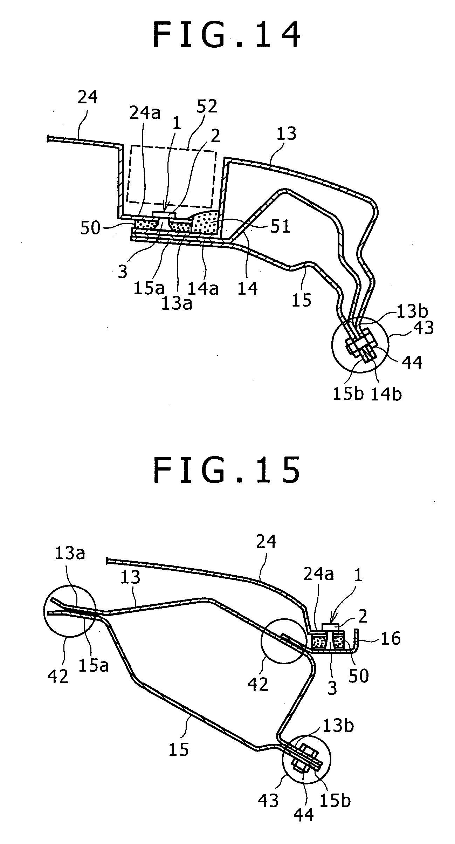

Figs. 14, and 15 each are a longitudinal sectional view showing a mode of an installation structure for the flanges 24a, 24a, provided on the respective sides of the aluminum roof panel 24. Figs. 14, and 15 each show only the left side face of the automobile body 60, in Fig. 16, along a side member outer panel 13 made of steel, on the respective sides of the aluminum roof panel 24, in a perspective view of the automobile body 60 in Fig. 16, corresponding to sectional views taken on lines G-G', H-H', and so forth, respectively.

### (Mode in Fig. 14)

First, in Fig. 14, the flange 24a of the aluminum roof panel 24 is integrally joined with respective steel upper flanges 13a, 14a, and 15a of the steel side member outer panel 13, a steel roof-side rail 14, and a steel side member inner panel 15.

More specifically, the flange 24a of the aluminum roof panel 24 is joined (spot welded) with the respective steel upper flanges 13a, 14a, and 15a, in such a state as superimposed one another in three layers, through the intermediary of a head 2 of an iron-base rivet 1 clinched beforehand, and a stem 3 thereof, penetrated toward those steel products. In other words, Fig. 14 shows a mode in which the iron-base rivet 1 clinched beforehand, together with the respective steel upper flanges 13a, 14a, and 15a, in the state as superimposed one another in three layers, is spot welded with the flange 24a of the aluminum roof panel 24. As a result of such spot welding, an integral weld nugget 12 is formed only within a scope of an interface between the bottom (4) of the stem 3 of the rivet 1, penetrated toward the steel products, and each of the steel upper flanges 13a, 14a, and 15a, as show in Fig. 8, and in such a way as to penetrate through the respective steel upper flanges 13a, 14a, and 15a although not shown in Fig. 14.

Amount (the flange 24a) of the aluminum roof panel 24 is provided with an intermediate resin layer 50 interposed between the aluminum flange 24a and the steel flange 13a in order to prevent electrolytic corrosion caused by joining of dissimilar metals with each other. Further, there are also provided a sealer (sealing resin material) 51 for waterproof sealing, an exterior member 52, and so forth.

As described in the foregoing, the electrically insulating film, such as the organic resin film, and so forth, and the metal plating are present up to a fairly large thickness on the iron-base rivet 1, and the respective flanges 13a, 14a, and 15a, on the steel product side. In some cases, those films are intentionally applied to the aluminum roof panel 24 as well to be thereby present thereon. The present invention has a considerable advantage in that in spite of the above, and further, through the intermediary of the intermediate resin layer 50, or the respective steel flanges 13a, 14a, and 15a, in the state as superimposed one another in three layers, spot welding can be implemented with ease because the present invention is the case of the spot welding of the iron - iron similar metals with each other, that is, between the iron-base rivet 1, and the steel product.

In Fig. 14, respective lower flanges 13b, 14b, and 15b of the steel side member outer panel 13, the steel roof-side rail 14, and the steel side member inner panel 15 are mechanically and integrally joined with each other with the use of a self-piercing rivet, a common rivet 44, and so forth, in a region surrounded by a circle in the figure. Such joining may be implemented by welding connection such as spot welding, and so forth.

### (Mode in Fig. 15)

Fig. 15 is a longitudinal sectional view showing another example of the installation structure for the flange 24a of the aluminum roof panel 24. With the example shown in Fig. 15, the flange 24a of the aluminum roof panel 24 is joined with a steel roof drip channel 16 hanging over the steel side member outer panel 13, in the same way as shown in Fig. 14, and is integrally joined with the steel side member outer panel 13. That is, the iron-base rivet 1 clinched by the flange 24a of the aluminum roof panel 24 beforehand is connected with the steel roof drip channel 16 (one sheet) by spot welding.

As a result of the spot welding, a weld nugget 12 (not shown in Fig. 15) is formed only within a scope of an interface between the bottom (4) of the stem 3 of the iron-base rivet 1, penetrated toward a steel product, and the steel roof drip channel 16, as in the case of Fig. 8. Further, the flange 24a of the aluminum roof panel 24 is joined with the steel roof drip channel 16 through the intermediary of the intermediate resin layer 50, as is the case with Fig. 14.

In Fig. 15, the respective upper flanges 13a, and 15a of the steel side member outer panel 13, and the steel side member inner panel 15 are mechanically and integrally joined with each other by welding connection, such as spot welding and so forth, in a region surrounded by a circle in the figure. Further, the respective lower flanges 13b, and 15b of the steel side member outer panel 13, and the steel side member inner panel 15 are mechanically and integrally joined with each other with the use of a self-piercing rivet, a common rivet 44, and so forth, in a region surrounded by a circle in the figure. Furthermore, those methods for joining are not limited to this mode, and may be selected, or altered as appropriate depending on a prevailing condition.

### (Steel Product)

A high strength (Hi-ten) steel product with tensile strength not less than 450MPa, containing Si, Mn, and so forth, whatever its composition and type may be, is preferable as the steel product referred to in the present invention. Since a steel product lower in strength than that lacks strength if it is a thin sheet, in particular, there is a possibility that such a steel product will undergo significant deformation owing to pressure applied by electrode tips at the time of spot welding. As for types of steel products, use can be made of a rolled thin sheet in widespread use for the automobile body, and a heavy plate, or a shape and so forth, as appropriate. As described in the foregoing, the surface of any of the steel products, on one side thereof, or on both sides thereof, may be coated with any of known films commonly applied to a steel product, including a plating film of metal such as zinc, zinc alloy, and so forth, and / or an organic resin film such as a paint and so forth, a lubricant, and a lubricating oil. Those films each may be applied singly in a monolayer, or the same may be combined with each other to be applied in the form of a compound thereof, in a monolayer, or multi-layers.

### (Aluminum Alloy Product)

For an aluminum alloy product for use in the present invention, use is normally made of aluminum alloy which a sheet can be easily fabricated of, and can be formed into a roof panel with ease, besides being excellent in strength, selected, as appropriate, from among the standard designations AA, JIS3000 series, 5000 series, 6000 series, and so forth. The aluminum alloy of 6000 series, in particular, has artificial age-hardening properties under conditions of a baking finish processing of the automobile body. Accordingly, high strength can be attained with lower consumption of alloying elements, so that the aluminum alloy of 6000 series has an advantage in that scrap thereof can be recycled for use as a melting raw material for the original aluminum alloy of 6000 series. There is no particular limitation to a shape of the aluminum alloy product according to usage at respective parts of the automobile body, and the shape thereof can be selected as appropriate from among a general-purpose sheet, shape, forged product (the foregoing products are wrought products), cast product, die-cast product, and so forth. However, the aluminum alloy product relatively high in strength is preferable in order to check the deformation owing to the pressure applied by the electrode tips at the time of spot welding, as is the case with the steel product. As described in the foregoing, the surface of any of the aluminum alloy products, on one side thereof, or on both sides thereof, may be coated with any of known films commonly applied to the aluminum alloy product, including a plating film of metal such as zinc, zinc alloy, and so forth, and / or an organic resin film such as a paint and so forth, a lubricant, and a lubricating oil. Those films each may be applied singly in a monolayer, or the same may be combined with each other to be applied in the form of a compound thereof, in a monolayer, or multi-layers.

Further, various properties, such as excellent press formability, BH characteristic (bake hardenability), strength, weldability, corrosion resistance, and so forth, are required of an automobile body panel such as the aluminum roof panel, and so forth. In order to meet such requirements as described above, a 6000 series aluminum alloy sheet is preferably an Al-Mg-Si base aluminum alloy sheet having a composition comprising, by mass %, 0. 4 to 1. 0% of Mg, 0. 4 to 1. 5% of Si, 0. 01 to 0. 5% of Mn, and 0. 001 to 1. 0% of Cu, a balance comprising Al and unavoidable impurities. Further, in order to improve the BH characteristic, an excessive Si type 6000 series aluminum alloy sheet with a mass ratio of Si to Mg, an Si / Mg ratio at 1 or greater, is preferably used.

Further, various properties, such as excellent bending crushability, corrosion resistance and so forth, are required of an extruded product for use as the reinforcement of the automobile body. In order to meet such requirements as described above, a 6000 series aluminum alloy extruded product is preferably an Al-Mg-Si base aluminum alloy sheet having a composition comprising, by mass %, 0. 30 to 1. 0% of Mg, 0. 30 to 0. 95% of Si, 0. 01 to 0. 40% of Fe, and 0. 001 to 0. 65% of Cu, a balance comprising Al and unavoidable impurities. Furthermore, the preferable composition described may selectively include either one element, or two elements, selected from the group consisting of 0. 001 to 0. 2% of Cr, and 0. 001 to 0. 2% of Zr, so as to be not more than 0. 30% in total content, or one element or two elements, selected from the group consisting of 0. 001 to 0. 25% of Zn, and 0. 001 to 0. 10% of Ti

### (Steel Product Thickness and Aluminum Alloy Product Thickness)

Further, there is no particular limitation to a thickness (sheet thickness, and so forth) of a welded portion of the steel product, and a thickness (sheet thickness, and so forth) of a welded portion of the aluminum alloy product. The thickness is selected, or determined as appropriate on the basis of design conditions such as required strength, rigidity, and so forth with respect to an application member such as an automobile member, and so forth.

However, assuming that the steel product is for use as the automobile member, and so forth, a thickness t of the steel product (weldedportion) is selected from a range of 0. 3 to 3. 0 mm. If a thickness of the steel product is too thin, the strength, and rigidity, necessary for the automobile member, cannot be secured, and therefore, such a thickness is inadequate. Further, in addition, in the case of joining by, for example, the spot welding, the steel product undergoes significant deformation owing to the pressure applied by the electrode tips, thereby causing an oxide film to be easily destroyed, so that reaction with aluminum is promoted. As a result, a fragile intermetallic compound is liable to be formed. On the other hand, if the thickness of the steel product is too large, this will render spot welding connection itself difficult to be effected.

Further, similarly assuming that the aluminum alloy product is for use as the automobile member, and so forth, a thickness t of the aluminum alloy product (welded portion) is selected from a range of 0. 3 to 6. 0 mm. If a thickness of the aluminum alloy product is too thin, not only the aluminum alloy product will lack in strength as the automobile member, and such a thickness is therefore inadequate, but also an adequate diameter of the weld nugget cannot be obtained, and fusion is prone to reach as far as the surface of aluminum alloy, thereby causing surface flash liable to occur, so that there arises a possibility of failing to gain a high joining strength. On the other hand, if the thickness of the aluminum alloy product is too large, this will render it difficult to caulk the iron-base rivet 1.

### (Welding Method)

With the present invention, a welding method is the spot welding in widespread use for assembling of automobile members, as the primary usage in the present invention. That is, MIG welding, and laser welding are outside the targets of the invention, and welding methods, such as ultrasonic bonding for not melting both metals, diffusion joining, friction pressure welding, brazing, and so forth are also outside the targets of the invention.

Further, as for a spot welding condition, a common condition in widespread use for joining iron - iron similar metals with each other, as it is, can be used. In other words, the present invention has a major advantage in that although the present invention is concerned with joining of aluminum - iron dissimilar metals with each other, the condition in widespread use for joining the iron - iron similar metals with each other is applicable thereto,

As a preferable condition at each of spots for the spot welding, the pressure applied between the electrodes 40, 41, in Fig. 7, is preferably kept in a range of 1. 0 to 5. 0 kN. Further, current flowing between the electrodes is preferably kept in a range of 5 to 15 kA (more preferably from 7 to 8 kA), and energization is preferably carried out for a time length not more than 200 × t msec in consideration of a thickness t of a portion of the aluminum alloy, to be joined. By so doing, the peel strength of the dissimilar metals joint, as measured on the basis of the cross-tensile test-piece, can be rendered not less than 2 kN.

Incidentally, in the case of joining the aluminum - iron dissimilar metals with each other, spot welding will require an inter-electrode current as large as not less than 15 kA which is beyond the capacity of an available spot welder for use in welding of steel products with each other in an automobile manufacturing process if the aluminum alloy product increases in thickness and the steel product decreases in thickness. Thus, the fact that the spot welder, spot welding condition, and spot welding method, commonly in widespread use for joining the aluminum - iron dissimilar metals with each other, as they are, are not applicable to the spot welding in the case of joining the aluminum - iron dissimilar metals with each other has since posed a major stumbling block to application of the aluminum alloy product to use for spot welding.

Those requirements described in the foregoing, are each applicable to not only the aluminum alloy product but also a magnesium product as another light metal product. A general-purpose AZ base alloy (an alloy containing Al, Zn) standardized in JIS, or ASTM is suitable for use as the magnesium product. Further, there is no particular limitation to a shape of the magnesium product according to usage at respective parts of the automobile body, and so forth, and the shape thereof can be selected as appropriate from among the sheet, shape, forged product (the foregoing products are wrought products), cast product, die-cast product, and so forth.

According to the present invention, there is provided a method for joining dissimilar metals, a steel product and a light metal product, with each other, capable of implementing spot welding between iron - iron similar metals, instead of spot welding between a light metal such as aluminum - iron dissimilar metals, thereby attaining a high joining strength by virtue of a synergistic effect of the spot welding, and clinching of the light metal product with a steel-base rivet, added thereto. Similarly, the present invention can also provide a dissimilar metals joint of a steel product and a light metal product, a light metal product to be joined with a steel product, and a rivet for joining dissimilar metals of a steel product and a light metal product, with each other. Accordingly, the present invention can be usefully applied to structural products for the automobile body.

Further, with the present invention in its applications to other cases, it is possible to implement not only joining of the dissimilar metals of light metal - iron, with each other, but also joining of dissimilar metals, such as a light metal - another light metal, or joining of similar metals, such as light metals, with each other. The joining of the dissimilar metals with each other can include, for example, the case of joining a light metal product with a magnesium alloy product, and the joining of similar metals with each other can include, for example, the case of joining light metal products with each other, or joining magnesium alloy products with each other. More specifically, a rivet made of an iron-base metal is connected to (embedded in) each of the selected light metal products and the rivets at respective connection spots of the light metal products are aligned with each other (superimposed one over the other) so as to be in contact with each other. Then, those rivets can be connected with each other by carrying out the spot welding between the iron - iron similar metals, thereby joining the light metal products with each other.

## Claims

1. A method for joining dissimilar metals of a steel product and a light metal product with each other, comprising the processes of:
rivet connection; and
spot welding, said method meeting requirements "a" to "g" as follows:
the requirement "a"; said light metal product and a rivet made of an iron-base metal are connected with each other beforehand in a previous process preceding spot welding and subsequently, said rivet and said steel product are spot welded with each other;
the requirement "b"; said rivet has a sectional shape substantially resembling the letter T comprising a head, and a stem, and a cavity for use in clinching said light metal product, formed in at least either the head or the stem;
the requirement "c"; upon joining said light metal product with said rivet, the stem of said rivet is driven into a position in said light metal product, corresponding to spot welding between said light metal product and said steel product;
the requirement "d"; upon driving said rivet, while the light metal product is blanked out by the stem of said rivet, a tip of the stem of said rivet is penetrated through said light metal product toward the side thereof, for connection with the steel product, thereby embedding the stem of the rivet into said light metal product;
the requirement "e", upon driving said rivet, said light metal product is further caused to undergo plastic flow into a cavity of said rivet, for clinching said light metal product to be thereby clinched with said rivet beforehand;
the requirement "f": after said light metal product is clinched with said rivet, said light metal product with said rivet embedded therein is superimposed on said steel product, at a required spot thereof, and said steel product is brought into contact with the tip of the stem of said rivet; and
the requirement "g", while the head of said rivet, on the side of said light metal product, and said steel product are pressed by electrodes, respectively, after said requirement "f", the electrodes are energized with each other via said rivet to thereby carry out spot welding for forming a weld nugget only within the scope of an interface between the stem of said rivet, and said steel product.

2. The method for joining dissimilar metals of a steel product and a light metal product with each other, according to claim 1, wherein said rivet is driven by press forming using an upper die for pressing the head of said rivet from the upper side, and a lower die for pressing said light metal product from the underside thereof.

3. The method for joining dissimilar metals of a steel product and a light metal product with each other, according to claim 1, wherein said rivet is driven into said light metal product upon said light metal product being subjected to press forming.

4. The method for joining dissimilar metals of a steel product and a light metal product with each other, according to claim 1, wherein a cavity for clinching said light metal product, formed in an outer peripheral surface of said rivet, is an empty space comprising a recess caved-in upward, formed underneath the head of said rivet, and a reverse-tapered shape gradually increasing in outside diameter thereof, downward.

5. The method for joining dissimilar metals of a steel product and a light metal product with each other, according to claim 1, wherein respective surfaces of said rivet and said steel product are coated with at least either a metal plating or an organic resin film.

6. The method for joining dissimilar metals of a steel product and a light metal product with each other, according to claim 1, wherein said method is used for fabrication of an automobile body structural material.
